# NEW EUROPEAN PATENT SPECIFICATION

(11) **EP 0 469 776 B2**
(45) Date of publication and mention of the opposition decision: **16.05.2001**
(45) Mention of the grant of the patent: 30.11.1994
(21) Application number: 91306719.5
(22) Date of filing: 23.07.1991
(51) Int. Cl.: H01M 2/18

(54) **Separators for electrochemical cells**
Separatoren für elektrochemische Zellen
Séparateurs pour cellules électrochimiques

(30) Priority: 30.07.1990 US 560651
(43) Date of publication of application: 05.02.1992
(73) Proprietor: EVEREADY BATTERY COMPANY, INC., St. Louis Missouri 63164 (US)
(72) Inventor: Kelemen, Marc P., North Olmsted, OH 44070 (US); Huhndorff, Harry R., Bay Village, OH 44140 (US); Cooper, Craig A., Randleman, NC 27317 (US)
(74) Representative: Lord, Hilton David

(56) References cited:
- CH-A- 593 564
- GB-A- 1 304 402
- US-A- 3 888 700
- US-A- 4 669 183
- BATTERIES, Marcel Dekker, Inc., N.Y. (1974), pp.258-261 and 351-359

## Description

The present invention relates to electrochemical cells wherein the electrodes are so arranged that one is located within the other, a separator arrangement being located between the electrodes to inhibit electrical shorting.

This type of arrangement is primarily suited for use with alkaline type cells. Standard alkaline cells are conventionally manufactured with a cathode which generally predominantly comprises an oxide depolariser, such as manganese dioxide, usually admixed with a binder and a conductive material, such as graphite. The cathode is generally pressed firmly against the inside wall of a cell container, with the inner portion of the cathode left hollow, so that the cathode assumes a cylindrical structure with a centrally defined cavity, closed at one end.

Separator material, usually formed into thin sheets of paper-like material, is inserted into the cathode's central cavity in such a manner that it conforms to the cavity of the cathode. An anode, which usually comprises a consumable anodic material, such as powdered zinc, admixed with a gelling agent, such as polyacrylic acid or carboxymethyl cellulose, and a suitable alkaline electrolyte, such as an aqueous potassium hydroxide solution, is then extruded into the cavity of the separator.

Thus, the sheets of separator material electrically isolate the anode from the cathode while simultaneously permitting ions to flow between the electrodes.

Generally, the separator strips will be forced downward and through the cathode's central cavity, so that the separator's centre region is parallel with, and close to, the bottom of the container. Occasionally insertion of the separator, using a rod driving means, is such that the centre region of the separator is driven into the cathode material at the bottom of the container. On such occasions, small pieces of the cathode may be driven into, and partially through, the separator, potentially resulting in a short circuit of the anode and cathode, rendering the cell useless.

In addition, during discharge of the cell, zinc dendrites may be formed which extend through the separator at the bottom region of the container, thereby short circuiting the cell.

Both of these problems are difficult to detect, as detection is only possible by disassembly of the cell, so as to inspect the bottom central portion of the separatorfor evidence of cathode mix penetration or dendrite penetration.

GB-A-2,181,584 describes a method of producing a separator basket for standard alkaline batteries. This process uses a mandrel to form and support a tube of separator material on which the separator material is folded over one end of the tube and then a small amount of sealant is dispensed on the outside surface of the folded over bottom of the separator to form a basket. The sealant seals the end of the separator basket and, in some applications, may secure the separator to other cell components, such as the cathode. As a final step, a mandrel-supported separator may be inserted into a can containing a moulded cathode.

CA-A-993,934 illustrates that carbon-zinc cells are commonly manufactured by inserting a carbon rod into a zinc can containing a cathode mix. This manufacturing process is known to suffer from mix penetration through the separator beneath the carbon rod. To overcome this, there are disclosed bottom cups having a mix-impermeable substance applied to the central region of the cup's inner surface. Coating of only the central portion of the bottom cup effectively prevents mix penetration directly, beneath the carbon rod while maximising both the cup's surface area available for soak up of the electrolyte and anode : cathode surface area.

US-A-3,748,181 discloses attaching a plastic strip to the top edge of a separator which is formed into a convoluted wound separator basket for cylindrical batteries. The film eliminates internal short circuits caused by mix-smearing near the open end of the can during the mix insertion process.

US-A-4,220,693 discloses a separator for alkaline cells in which one of the embodiments has polypropylene secured to the entire surface of the base separator film.

US-A-3,097,975 seeks to overcome internal short circuits caused when one electrode 'grows' through the separator's interstices. Apulverulent material, such as aluminium oxide or magnesium oxide, is used to reduce the size of the interstices.

It has now been discovered that it is possible to overcome the disadvantages of the art by providing an electrically insulating barrier at the bottom of the well defined in the outer electrode, in combination with crossed strips of insulator material to form a separator basket

Thus, in a first aspect, the present invention provides the process of claim 1.

The cells of the invention are suitably alkaline cells, generally with a cathode arranged in contact with the inner walls of the container. Such a cathode may conveniently be formed by placing a suitable preparation, such as a granulate, in the container and forcing in a ram. This serves the purpose of compacting the cathode material and, at the same time, ensures a snug fit with the walls of the container as well as leaving a suitable bore for the anode.

Thus, it will be appreciated that the cathode will generally take the form of a closed tube within the container, and having a central bore. While it is preferred that the cells of the invention have such a configuration, it is not essential. For example, the bore need not be central and, indeed, need not even be single. A multitude of bores may be provided for a high-power cell, but such an arrangement may prove awkward to manufacture. Where there is a multitude of bores, the separator arrangement of the invention may be provided in one or more of them, preferably all.

The bore in the external electrode, which is preferably the cathode but which may be the anode provided that suitable material is used, will generally be regular, especially where it is formed by a ram. However, there is no absolute requirement for regularity, as the separator material will generally be sufficiently flexible that, when the second electrode material, generally the anode, is forced in, it will take up the shape of the bore.

The outer electrode need not necessarily be formed in situ, and may be pre-formed. Thus, it will be appreciated that the bore may be open-ended, such that the bottom of the container forms the end of the bore in situ.

The separator arrangement is ideally in snug contact with both electrodes, as air bubbles, for example, can be seriously deleterious to performance of the cell. Such a snug fit will generally be ensured by ramming the arrangement into the bore in the outer electrode, followed by forcing the inner electrode material in.

It will be appreciated that the most common configuration of the separator arrangements of the invention is where the arrangement forms an open-ended tube within the bore of the outer electrode, typically the cathode. However, it is possible that, for example, the inner electrode material could be placed in a tube defined by the separator strips, whereon the strips could then be sealed over the inner electrode, thereby totally enclosing the inner electrode. In such an arrangement, the current collector could be inserted through the strips.

For the separator strips, any suitable material may be used, provided that, in situ, the separator basket is ionically permeable but electrically insulating. Suitable materials include woven or non-woven paper of cellulose fibres laminated to a similar mat of vinyl fibres, kraft paper, α-cellulose paper, methyl cellulose film, polyvinyl alcohol, copolymers of polyvinyl acetate and polyvinyl chloride, rayon, nylon, and mixtures thereof.

Any number of strips may be used, although two or three, especially two, are preferred. The strips will generally be arranged such that the middle portions overlap so that, before use, the effect is a regular cross or star. It will be appreciated that irregular shapes can also be used, but that there may be disadvantages if any arms of material do not extend sufficiently along the walls of the bore of the outer electrode. It is also not preferred that the arms extend out of the container, as this will generally necessitate their removal before assembly can proceed. Such removal is not necessarily difficult, but wastes time and requires extra tooling.

A regular shape is also preferred to ensure that the inner electrode is completely contained. An irregular cross or star may concentrate material on one side of the bore, while leaving little or no insulation on another.

Thus, it is preferred that the arms of the cross or star are both radially regularly spaced and of regular length, although irregular lengths are envisaged. Hence, the term "central portion" is used herein to distinguish over the ends of the strips, and does not necessarily mean the mathematical centre of any strip.

The extreme of the separator arrangement is that portion extending farthest into the bore of the outer electrode toward the base of the container. The electrically insulating barrier is positioned at this point to prevent dendrites extending through the separator and to prevent the mix permeating the material.

The barrier may be any suitable material that serves the purpose. It is not required that it be ionically permeable and, given that it is desirable that the barrier be durable and resilient, it is generally not practical for the barrier to be ionically permeable.

Suitable barrier materials generally include plastics, waxes, glues and other substances which are not electrically conductive. Preferred materials include polypropylene, polyethylene, polyvinyl chloride, asphalt, wax, polyvinylidene chloride, cellophane and nylon, particularly polypropylene and polyethylene.

The barrier may be positioned between strips. The barrier may comprise an adhesive strip of plastic tape.

It will be appreciated that there may be more than one barrier. This may either be an artefact of production, or because it is desired, for example because it strengthens the barrier. The strips may all be cut laterally from a length of material with a strip of barrier material down its centre. This will effectively provide a series of strips with a central barrier element. If no other barrierless strips are provided, then the number of barrier elements in the separator arrangement will correspond to the number of strips.

In such a case as the foregoing, the barrier elements may usefully be self-adhesive. The strips may then be placed face-to-face, so that a suitable, stable, star or cross is formed. This may prove advantageous in production.

It will be appreciated that both the barrier and the separator arrangement should cover the area defined by the bottom of the bore in the outer electrode. Either of the two, or both, may be larger, but this may require extra force, or inconvenience, in positioning the arrangement. If the area covered is smaller, then the risk is increased of dendrites or mix permeating the basket.

The present invention provides a process in which the second strip is rotated from the first, preferably by 90°, especially where no further strips are used, and optionally further strips are inserted.

The present invention particularly provides electrochemical cells, such as alkaline cells, which employ a tubular separator closed at one end which is composed of at least two separator strips each having a bottom segment and extending side walls with the bottom segment of one strip superimposed on the bottom segment of the other strip and wherein an electrically insulating barrier, such as a plastic film, is adhered on the surface of at least one of the bottom segments of the strips to prevent electrical shorting between the electrodes of the cell at the bottom vicinity of the cell assembly.

Electrochemical cells of the current process "in" are embodiment, are assembled in a housing comprising a container having a closed end and an open end closed by a cover a first active electrode material positioned within and contacting the inner wall of the container and defining a centrally disposed cavity; a separator comprising at least two separator strips with each strip having a bottom segment with extending walls and each wall being defined by two edges; the bottom segment of one strip being superimposed on the bottom segment of the other strip with the extending walls of each strip arranged to face the edges of the walls of the other strip so that the walls define a cavity in the separator; the separator positioned within and contacting the first active electrode material; a second active electrode material positioned within the cavity of the separator; a first terminal on the housing electrically connected to the first active electrode material; a second terminal on the housing electrically insulated from the first terminal and electrically connected to the second active electrode material; and wherein an electrically insulating barrier layer is adhered on the surface of at least one of the bottom segments of the separator strips to prevent internal shorting between the electrodes.

A preferred arrangement is where each separator strip has a top surface and a bottom surface and the electrically insulating barrier layer is disposed on the top surface of the bottommost separator strip.

Alternatively, the electrically insulating barrier layer is disposed on the bottom surface of the topmost separator strip.

In general, it is preferred that the separator comprises two strips; that the first active electrode material is the cathode and the second active electrode material is the anode; and that the cathode comprises manganese dioxide and the anode comprises zinc.

A layer means a coating, film or any other discrete material that is on or in the surface of a bottom segment of the separator strip. Suitable electrically insulating barrier layer materials include polypropylene, polyethylene, polyvinyl chloride, asphalt, wax, polyvinylidene chloride, cellophane and nylon.

The electrically insulating barrier layer may also comprise a film or strip having an adhesive on one of its surfaces so that it can be secured to a selected area (bottom segment) of a separator strip. If the electrically insulating barrier material is a two-sided type adhesive tape then it can be disposed between the bottom segments of the separator strips, thereby keeping them secured during the assembly process.

If the electrically insulating barrier material is plastic, then it may be attached to the bottom surface of a separator strip using heat to laminate the plastic to the separator, or the plastic could be extruded directly onto the separator.

In all embodiments, the electrically insulating barrier material should provide effective protection against piercing of the bottom segment of the separator by small bits of active electrode material to prevent the development of an internal electrical short circuit.

Preferably, the first active electrode material is the cathode material, comprising an oxidic depolariser such as manganese dioxide, usually mixed with a binder and conductive material such as graphite, acetylene black or mixtures thereof. Preferably, the second active electrode material would be an anode comprising zinc admixed with a gelling agent and a suitable alkaline electrolyte, such as aqueous potassium hydroxide solution.

Suitable anode materials and their preparation are described in US-A-2,930,064, US-A-2,935,547 and US-A-2,993,947.

Although the edges of the walls of the separator strips are ideally abutting, thereby to provide a circular cylindrical configuration, in practice the edges may overlap to form an irregular cylindrical configuration. In some applications, the edges may be separated and still provide an overall irregular configuration that can be used in some cell applications. The only requirement is that the separator strips provide a cylindrical type basket having an overall upstanding wall that is completely closed so that the cathode is not in direct contact with the anode in any area of the separator.

A process for assembling a cell using the separator of this invention may comprise the steps:
(a) positioning a first active electrode material, such as a cathode, inside a container closed at the bottom and open at the top so that the first active electrode material defines a centrally disposed cavity, said container being adapted as the terminal for said first active electrode material;
(b) forcing a first strip of separator material and a second strip of separator material into the cavity of the first active electrode material and forcing the strips to assume the contour of the cavity of the first electrode material, said first strip being positioned at 90° with respect to said second strip so that a selected area at the mid-section of the strips overlaps and the electrically insulating barrier layer is adhered on the surface of at least one of the strips at the selected area at the mid-section of the strips that overlaps;
(c) adding a second active electrode material into the cavity of the separator material; and
(d) sealing the open end of the container with a cover and wherein at least a portion of the cover is electrically insulated from the container and electrically contacting said second active electrode material, thereby said portion being adapted as the terminal for the second active electrode material.

Thus, in a preferred embodiment, there is provided a process for assembling an electrochemical cell comprising the steps:
(a) positioning a first active electrode material inside a container closed at the bottom and open at the top so that the first active cathode material defines a centrally disposed cavity, the container being adapted as the terminal for the first active electrode material;
(b) forcing a first strip of separator material and a second strip of separator material into the cavity of the first active electrode material and forcing the strips to assume the contour of the cavity of the first electrode material, the first strip being positioned with respect to the second strip so that a selected area at the mid-section of the strips overlaps and the electrically insulating barrier layer is adhered on the surface of at least one of the strips at the selected area at the mid-section of the strips that overlap;
(c) adding a second active electrode material into the cavity of the separator material; and
(d) sealing the open end of the container with a cover and wherein at least a portion of the cover is electrically insulated from the container and electrically contacting the second active electrode material thereby the portion being adapted as the terminal for the second active electrode material. It will be appreciated that the process may be suitably modified so as to produce a cell with any separator arrangement of the invention as defined herein.

In particular, it is preferred that, in step (b), the first strip is forced into the cavity of the first active electrode material and then the second strip is rotated 90° to the original orientation of the first strip and then forced into and upon the first strip.

Specifically, a standard alkaline cell may be produced by preparing a quantity of powdered cathode material and disposing it into the open end of a cylindrical container. A moulding ram may then be pressed into the powdered mixture within the container and, since the ram's outside diameter is substantially smaller than the inside diameter of the can, an elongated tube of cathode mix becomes moulded tightly against the container's interior circumference. After the ram is withdrawn, a tubular shaped cavity is left in the central portion of the cathode. Two strips of a separator material may be inserted into the cathode's centrally located cavity in order to form a separator basket An electrolyte and a gel-like anode can then be dispensed into the separator basket and a seal assembly inserted into the open end of the container. This assembly will generally include an elongated current collector that projects into the anode, and a plastic disc-shaped seal that fits tightly within the container's opening and which seats slightly below the top of the container. The top of the container is redrawn until the seal is radially compressed, after which the lip of the container may be crimped inwardly.

A preferred separator insertion process for standard alkaline cells utilises two strip-shaped pieces of separator material. The first step in the separator insertion process involves cutting a first strip of separator to an appropriate length and width. The length should be equal to at least twice the cathode's height plus the inside diameter of the cathode. The width of the strip should be slightly greater than one-half the cathode's inside circumference. Next, the first strip is positioned over the open end of a container that contains a moulded cathode. The strip's broad surfaces should be perpendicular to the cathode's longest dimension and the centre point of the separator should align with the cathode's longitudinal axis. Arod-shaped separator insertion ram is then positioned above the open end of the container. The rod's outside diameter should be slightly smaller than the inside diameter of the cathode's cavity, and the circumference of the ram should be concentric with the circumference of the cathode's cavity.

As the ram descends, it carries the middle portion of the separator downward into the cathode's central cavity until the separator touches the inside bottom of the cathode. The two walls of the separator strip that extend beyond the separator's central region extend upward from the bottom of the cathode and line the cathode's side walls. The surface of the first strip that contacts the cathode is referred to as the outside surface of the first strip while the opposite side of the separator is referred to as the inside surface of the first strip.

A second strip of separator is cut to the correct length and width. The central portion of the second strip is positioned over the open end of the cathode that already contains the first separator strip. When the second strip is positioned above the container, it is rotated so that after the second strip is inserted into the container, the seams of the second strip are turned 90° relative to the seams in the inserted first separator strip. This rotational offset seam arrangement helps to inhibit particles of zinc in the anode mix that may otherwise work their way through the seams of both separators and thereby create an internal short circuit.

After the second strip has been properly located, another rod-shaped insertion ram is positioned above the cathode and concentrically aligned with the inside diameter of the cathode's cavity. The second separator insertion ram descends and inserts the second separator strip inside the previously inserted first separator strip. The walls of the second separator extend upward from the bottom of the cathode and line the inside surface of the first separator. The surface of the second separator that contacts the inner surface of the first separator is referred to as the outside surface of the second separator. The other surface of the second separator faces the longitudinal axis of the cathode's cavity and is referred to as the inside surface of the second separator.

An efficient and reliable separator insertion process is important to the production of standard alkaline batteries on a continuous basis. The separatorshould be consistently inserted to the bottom of the cathode's cavity at the high speeds required by mass production processes and this should be done without abusing the separator. The invention specifically solves the problem of stopping particles of cathode mix being driven into the separator, as the separator insertion rams 'bottom out' against the inside bottom of the cathode.

Protection against cathode mix penetrating through the bottom of the separator is preferably achieved by applying a strip of plastic to the outside surface of the second separator.

In order to reliably prevent mix penetration through the bottom of the separator, the width of the plastic strip should cover the entire bottom of the separator basket or diameter of the cavity of the cathode.

Selection of the plastic strips' width, location of the strip on the separator and insertion of the strip into the cathode should be coordinated and controlled to ensure that the plastic strip prevents mix penetration and does not limit the cell's service to an unacceptable degree.

Additional benefits include preventing the build up of material in the anode compartment which can lead to the formation of zinc dendrites in the anode that extend through the separator into the cathode.

The cells of the present invention, therefore, overcome the problems of the art, and means are provided to effectively prevent internal shorting at the bottom area of the cell's container. The separator is easy and economical to make, and can effectively prevent the cathode material of the cell from penetrating through the separator at the bottom area of the container of the cell.

The present invention will now be further illustrated with respect to the accompanying drawings, in which:
Figure 1 is a top view of two separator strips of the invention, showing the first strip superimposed over a second strip at 90° to the first strip, so that only the central areas overlap;
Figure 2 is an isometric view of two separator strips after the non-overlapping serpents (walls) of the strips are folded normal to the plane of the overlapping area of the strips and curved inward to form a closed end cylindrical configuration;
Figure 3 is a cross-sectional view of Figure 2 taken through line 3-3;
Figure 4 is a sectional view of the separator of Figure 2 positioned within the cavity of a cylindrically constructed cathode; and
Figure 5 is a top view of a sheet of separator material hiving an electrically insulating barrier layer secured to the middle area of the sheet.

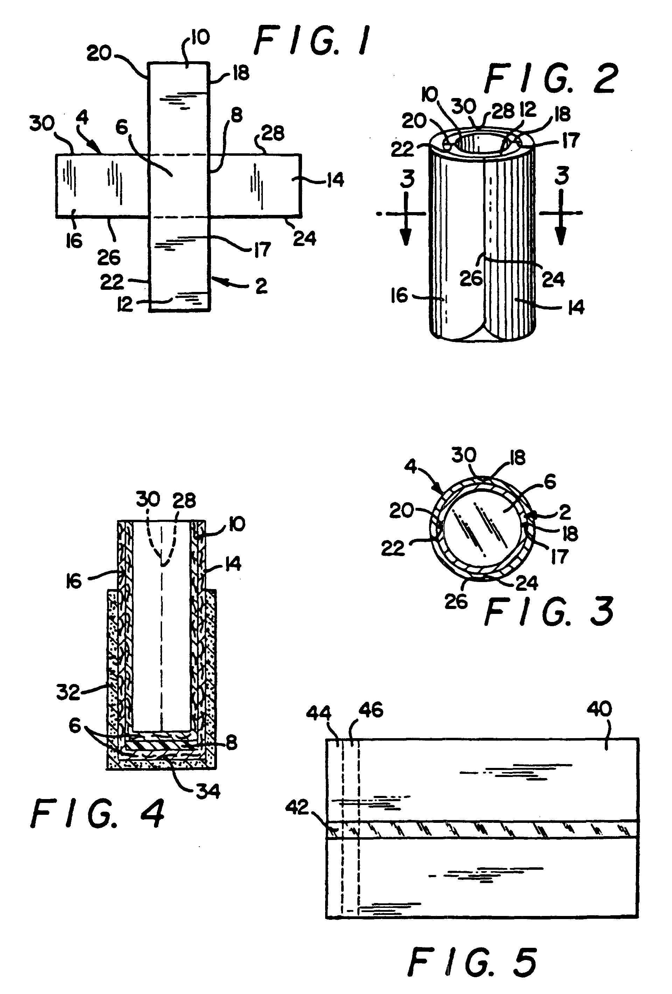

Figure 1 shows a first strip of separator material 2 positioned over and rotated 90° on a second strip of separator material 4 so that overlapping occurs only in area 6. Deposited between separator 2 and separator 4 in area 6 is an electrically insulating barrier layer 8.

As shown in Figure 2, when projecting the separator strips into a circular cavity of a cathode lined container, walls 10 and 12 of strip 2 are bent normal to area 6 forming a circular configuration. Walls 14 and 16 are also bent normal to area 6, and encircle walls 10 and 12, to provide an overall cylindrical configuration, as shown in Figures 2 and 3. This cylindrical configuration conforms to the interior of the cathode pressed firmly against the inside wall of the container.

As evident from Figures 2 and 3, wall 14 faces edges 17 and 18 of strip 2; wall 16 faces edges 20 and 22 of strip 2; wall 12 faces edges 24 and 26 of strip 4; and wall 10 faces edges 28 and 30 of strip 4. Thus, the separator strips 2 and 4 are folded during insertion into a cylindrical cavity of the cathode, and conform to the shape of the cylindrical cavity.

As shown in Figure 4, the overlapping area 6, containing the electrically insulating barrier 8, is positioned at the bottom of the cylindrical cavity of the cathode 32 in contact with the bottom inner surface 34 of cathode 32. Thus, the electrically insulating barrier 8 effectively prevents small pieces of cathode material at the bottom 34 of cathode 32 from penetrating into and through the separator at area 6, when the separator strips 2 and 4 are forced into the cavity of the cathode and against the bottom 34 of cathode 32.

Figure 5 shows a sheet of separator material 40 with a strip of an electrically insulating barrier layer 42 secured at its mid-section. The sheet 40 may be cut into strips, as exemplified by 44 and 46 (broken lines), to provide separator strips that may be used as one of the separator strips shown in Figure 1. If desired, two such strips 44, 46 may be used if a double layer of electrically insulating barrier material is desired for a particular application. Referring to Figure 1, the electrically insulating barrier 8 may be placed on the top and/or bottom side of strip 2; and/or on the top and/or bottom side of strip 4 depending on the particular application of the separator in the cell.

### EXAMPLE

Six hundred standard 4A size alkaline cells were produced using a two strip separator as described above. Four hundred identical cells were made except that a polypropylene film was disposed between the overlapping separator strips at the bottom segment of the separator that was forced against the bottom surface of the cathode mix. The cells were placed in storage at 45°C for 6 months and then tested. The cells with the polypropylene film were found to have no short circuits while the standard cells without the polypropylene film were found to have 3.2% failure due to penetration of cathode material through the bottom segment of the separator.

## Claims

1. A process for assembling an electrochemical cell wherein, after providing a cell container having a first electrode assembled therein containing a bore, a strip of separator material is forced therein, such that a central portion thereof is brought into contact with the bottom of the bore and such that the radial portions of the strip line the sides of the bore, followed by forcing a second separator strip into the bore as defined for the first strip, the second strip being rotated from the first, further strips optionally also being inserted, such that the walls of the bore are covered to prevent electrical, but not lonic contact, between the electrodes in use, an electrically insulating barrier being provided at the bottom of the bore, said barrier being adhered to one of the strips and being effective to prevent cathode material penetrating the separator, and then assembling the remainder of the cell in a known manner.

2. A process according to claim 1, wherein the electrically insulating barrier is a plastic.

3. A process according to claim 1 or 2, wherein the barrier is polypropylene, polyethylene, polyvinyl chloride, asphalt, wax, polyvinylidene chloride, cellophane or nylon, particularly polypropylene or polyethylene.

4. A process according to any preceding claim, wherein the barrier is disposed between two strips.

5. A process according to any preceding claim, wherein the barrier is an adhesive strip of plastic tape.

6. A process according to any preceding claim, wherein only two strips are used.

7. A process according to any preceding claim, wherein the outer electrode is the cathode and the inner electrode is the anode, the cathode preferably comprising manganese dioxide and the anode preferably comprising zinc.

8. A process according to any preceding claim, wherein the separator strips are woven or non-woven paper of cellulose fibres laminated to a similar mat of vinyl fibres, kraft paper, a-cellulose paper, methyl cellulose film, polyvinyl alcohol, a copolymer of polyvinyl acetate and polyvinyl chloride, rayon, nylon, or a mixture of any of these.

9. A process according to any preceding claim, wherein only two strips are used and the second strip being rotated from the first by 90°.

10. An electrochemical cell obtainable by a process according to any preceding claim.

## Patentansprüche

1. Verfahren zum Zusammenbauen einer elektrochemischen Zelle, bei welchem nach Bereitstellung eines Zellenbehälters, der in sich eine eine Bohrung aufweisende erste Elektrode aufweist, zwangsweise ein Streifen aus Trennmaterial eingeführt wird, so dass ein zentraler Abschnitt dieses Materials in Berührung mit dem Boden der Bohrung gebracht wird, und die radialen Abschnitte des Streifens entlang den Seiten der Bohrung verlaufen, gefolgt von einem zwangsweisen Einbringen eines zweiten Trennstreifens in die Bohrung wie beim ersten Streifen, wobei der zweite Streifen gegenüber dem ersten verdreht ist, wobei wahlweise auch weitere Streifen eingeführt werden, so dass die Wände der Bohrung so abgedeckt sind, dass ein elektrischer, nicht jedoch ein ionischer Kontakt zwischen den Elektroden im Gebrauch verhindert wird, und eine elektrisch isolierende Sperre am Boden der Bohrung vorgesehen ist, wobei die Sperre an einem der Streifen angehaftet wird und verhindert, dass Kathodenmaterial in das Trennelement eindringt, und dann der Rest der Zelle auf bekannte Weise zusammengebaut wird.

2. Verfahren nach Anspruch 1, bei welchem die elektrisch isolierende Sperre ein Kunststoff ist.

3. Verfahren nach Anspruch 1 oder 2, bei welchem die Sperre Polypropylen, Polyethylen, Polyvinylchlorid, Asphalt, Wachs, Polyvinylidenchlorid, Cellophan oder Nylon ist, insbesondere Polypropylen oder Polyethylen.

4. Verfahren nach einem der voranstehenden Ansprüche, bei welchem die Sperre zwischen zwei Streifen angeordnet ist.

5. Verfahren nach einem der voranstehenden Ansprüche, bei welchem die Sperre ein Klebestreifen aus Kunststoffband ist.

6. Verfahren nach einem der voranstehenden Ansprüche, bei welchem nur zwei Streifen eingesetzt werden.

7. Verfahren nach einem der voranstehenden Ansprüche, bei welchem die äußere Elektrode die Kathode und die innere Elektrode die Anode ist, die Kathode vorzugsweise Mangandioxid aufweist, und die Anode vorzugsweise Zink aufweist.

8. Verfahren nach einem der voranstehenden Ansprüche, bei welchem die Trennstreifen ein gewebtes oder unverwebtes Papier aus Zellulosefasem sind, das mit einer entsprechenden Matte aus Vinylfasem, Kraftpapier, α-Zellulosepapier, Methylzellulosefilm, Polyvinylalkohol, einem Copolymer aus Polyvinylacetat und Polyvinylchlorid, Rayon, Nylon, oder einer Mischung irgendwelcher dieser Bestandteile, zusammenlaminiert ist.

9. Verfahren nach einem der voranstehenden Ansprüche, bei welchem nur zwei Streifen eingesetzt werden und der zweite Streifen gegenüber dem ersten um 90° verdreht ist.

10. Elektrochemische Zelle, die mit einem Verfahren nach einem der voranstehenden Ansprüche hergestellt werden kann.

## Revendications

1. Procédé d'assemblage d'une pile électrochimique, dans lequel, après la fourniture d'un conteneur de pile comportant une première électrode qui y est assemblée, contenant un alésage, une bande de matériau de séparateur y est enfoncée, de sorte qu'une partie centrale correspondante est mise en contact avec le fond de l'alésage et que les éléments radiaux de la bande bordent les côtés de l'alésage, cette étape étant suivie par l'enfoncement d'une deuxième bande de séparateur dans l'alésage, comme défini pour la première bande, la deuxième bande étant tournée par rapport à la première, et par l'insertion au choix de bandes supplémentaires, de sorte que les parois de l'alésage sont couvertes pour empêcher un contact électrique, mais non pas un contact ionique, entre les électrodes en service, une barrière à isolement électrique étant agencée au fond de l'alésage, ladite barrière étant attachée à une des bandes et servant à empêcher la pénétration du matériau de la cathode dans le séparateur, avant l'assemblage du reste de la pile d'une manière connue.

2. Procédé selon la revendication 1, dans lequel la barrière à isolement électrique est composée d'un plastique.

3. Procédé selon les revendications 1 ou 2, dans lequel la barrière est composée de polypropylène, de polyéthylène, de chlorure de polyvinyle, d'asphalte, de cire, de chlorure de polyvinylidène, de cellophane ou de nylon, en particulier de polypropylène ou de polyéthylène.

4. Procédé selon l'une quelconque des revendications précédentes, dans lequel la barrière est agencée entre deux bandes.

5. Procédé selon l'une quelconque des revendications précédentes, dans lequel la barrière est une bande adhésive de ruban plastique.

6. Procédé selon l'une quelconque des revendications précédentes, dans lequel on n'utilise que deux bandes.

7. Procédé selon l'une quelconque des revendications précédentes, dans lequel l'électrode externe est la cathode, l'électrode interne étant l'anode, la cathode étant de préférence composée de dioxyde de manganèse et l'anode comprenant de préférence de zinc.

8. Procédé selon l'une quelconque des revendications précédentes, dans lequel les bandes de séparateur sont en papier tissé ou non tissé de fibres de cellulose laminées en un matelas similaire de fibres de vinyle, en papier kraft, en papier de α-cellulose, en un film de méthylcellulose, en alcool polyvinylique, en un copolymère d'acétate de polyvinyle et de chlorure de polyvinyle, en rayonne, en nylon ou en un mélange de l'une quelconque de ces substances.

9. Procédé selon l'une quelconque des revendications précédentes, dans lequel on n'utilise que deux bandes, la deuxième bande étant tournée de 90° par rapport à la première.

10. Pile électrochimique pouvant être produite par un procédé selon l'une quelconque des revendications précédentes.
